# EUROPEAN PATENT APPLICATION

(11) **EP 3 530 567 A1**
(43) Date of publication of application: **28.08.2019**
(21) Application number: 17924444.7
(22) Date of filing: 08.09.2017
(51) Int. Cl.: B64C 39/02, B64C 13/20, B64D 27/24

(54) **AERIAL VEHICLE**

(71) Applicant: Agatsuma Co., Ltd., Tokyo 111-8524 (JP)
(72) Inventor: TODOKORO Shinji, Tokyo 111-8524 (JP)
(74) Representative: Gill Jennings & Every LLP
(86) International application number: PCT/JP2017/032477
(87) International publication number: WO 2019/049313

(57) **Abstract**

A flying body 1 includes a fixed rotor supporting a first rotor blade to revolve, a movable rotor supporting a second rotor blade to revolve, and a drive unit for changing an angle of a second revolving plane Pr of the second rotor blade relative to a first revolving plane Pf of a first rotor blade by rotating the movable rotor. The drive unit changes operation modes of the flying body among a normal movement mode where the first revolving plane Pf becomes parallel to the second revolving plane Pr, a high-speed flight mode where the second revolving plane Pr is tilted towards the first rotor blade relative to the first revolving plane Pf, and a high-speed running mode where the second revolving plane Pr is tilted more towards the first rotor blade relative to the first revolving plane Pf than in the high-speed flight mode.

## Description

### BACKGROUND OF THE INVENTION

### Field of the Invention

The present invention relates to a flying body including a plurality of rotor blades.

### Description of the Related Art

There have conventionally been proposed flying bodies, which is called a drone, including a plurality of rotor blades. For example, Japanese Patent Laid-Open No. 2016-222031 discloses an electric aircraft in which electric power is supplied from a plurality of battery modules to a motor control unit.

A robot aircraft like this electric aircraft enables a desired flight by controlling outputs of motors by the motor control unit. For example, in a hovering state where the aircraft stays stationary in the air, a tilt is detected using a gyroscopic device mounted on a fuselage, and an output of a motor mounted at a side of the fuselage that is being lowered is increased, while an output of a motor mounted at a side of the fuselage that is being raised is decreased, whereby the fuselage is kept parallel. Further, when the aircraft moves forwards, an output of a motor mounted at a side of the fuselage facing the moving direction is decreased, while an output of a motor mounted at an opposite side of the fuselage is increased, causing the aircraft to take a forward tilting posture to generate a propelling force in the moving direction.

In the electric aircraft disclosed in Japanese Patent Laid-Open No. 2016-222031, when it attempts to move forwards, the aircraft needs to perform a preparatory action of tilting once the fuselage in the moving direction, causing a problem in that the response in moving is not quick.

### SUMMARY OF THE INVENTION

An object of the invention is to provide a flying body in which the response in moving is improved.

To achieve the object, according to an aspect of the invention, there is provided a flying body including a fixed rotor supporting a first rotor blade in a revolving manner, a movable rotor supporting a second rotor blade in a revolving manner, and a drive unit configured to change an angle of a second revolving plane of the second rotor blade relative to a first revolving plane of a first rotor blade by rotating the movable rotor.

According to the aspect of the invention, the flying body can be provided in which the response in moving is improved.

### BRIEF DESCRIPTION OF THE SEVERAL VIEWS OF THE DRAWINGS

FIG. 1 is a schematic plan view of a flying body and a controller according to an embodiment of the invention;
FIG. 2 is a schematic side view of the flying body according to the embodiment of the invention;
FIG. 3 is a circuit block diagram of the controller according to the embodiment of the invention;
FIG. 4 is a circuit block diagram of the flying body according to the embodiment of the invention;
FIG. 5 is a schematic side view illustrating a high-speed flight mode of the flying body according to the embodiment of the invention; and
FIG. 6 is a schematic side view illustrating a high-speed running mode of the flying body according to the embodiment of the invention.

### DETAILED DESCRIPTION OF THE PREFERED EMBODIMENT

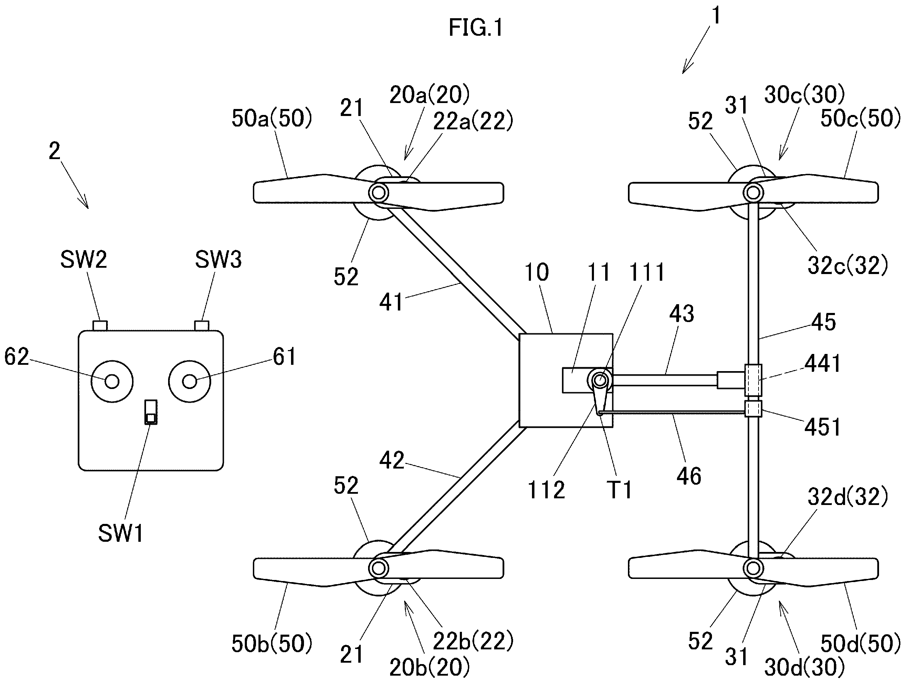

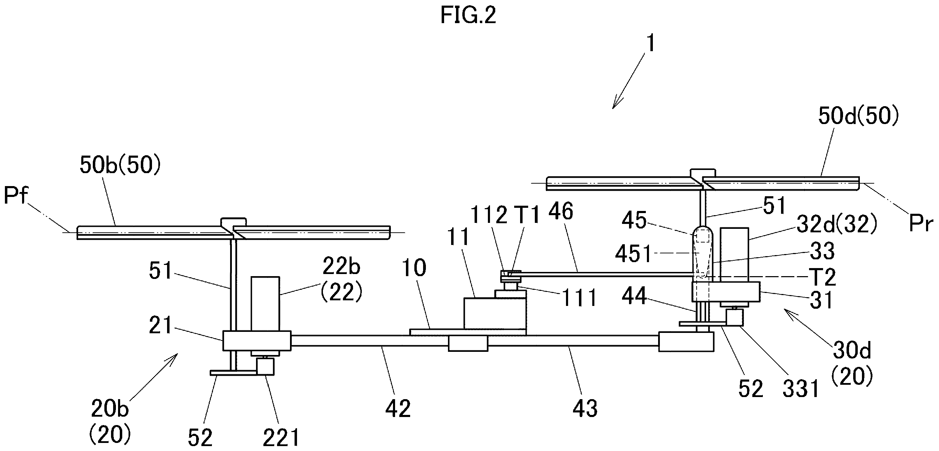

Hereinafter, an embodiment of the invention will be described. FIG. 1 is a schematic plan view of a flying body 1 and a controller 2. FIG. 2 is a schematic side view of the flying body 1. The flying body 1 of this embodiment is a flying body that can move to the front, rear, left and right and hover by controlling revolution speeds and directions of revolving planes of four rotor blades 50 (first rotor blades 50a, 50b, second rotor blades 50c, 50d). In the following description, a side of the flying body 1 where fixed rotors 20 are disposed is referred to as front, and a side of the flying body 1 where movable rotors 30 are disposed is referred to as rear. Additionally, a right side of the flying body 1 when the flying body 1 is viewed from the rear is referred to as right, and an opposite side to the right side is referred to as left. A side of the flying body 1 where the rotor blades 50 are provided is referred to as top, and an opposite side to the top is referred to as bottom.

The flying body 1 includes a substrate main body 10, left front and right front fixed rotors 20a, 20b (20), and left rear and right rear movable rotors 30c, 30d (30). The substrate main body 10 and the right front fixed rotor 20a are connected together by a front rod-like support stay 41 that extends obliquely rightwards to the front from the substrate main body 10. The substrate main body 10 and the left front fixed rotor 20b are connected together by a front rod-like support stay 42 that extends obliquely leftwards to the front from the substrate main body 10. A rear rod-like support stay 43 is provided to extend substantially parallel to a linkage 46, which will be described later, from a rear end of the substrate main body 10.

As illustrated in FIG. 2, a support post 44 is provided at a rear end of the rear support stay 43 in such a manner as to rise upwards therefrom. A substantially cylindrical bearing 441, having a transversely through opening, is formed at an upper end of the support post 44 (refer to FIG. 1). A cylindrical rotation shaft 45, having a circular cross section and extending transversely, is rotatably inserted through the bearing 441. The left rear and right rear movable rotors 30c, 30d are fixed to both ends of the rotation shaft 45. Consequently, the substrate main body 10 and these movable rotors 30c, 30d are connected by the rear support stay 43, the support post 44, and the rotation shaft 45.

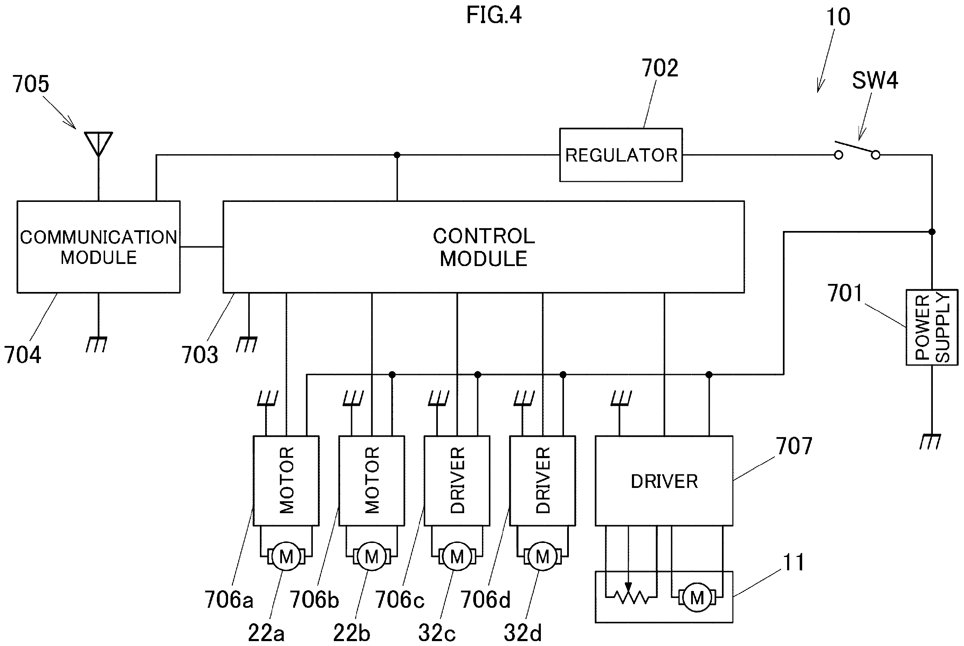

The substrate main boy 10 has a plate-like shape. The substrate main body 10 has a control circuit, which will be described by reference to FIG. 4 later, and includes a motor 11 on an upper surface thereof. A rotation shaft 111 of the motor 11 extends upwards. A first link member 112, configured to rotate as the rotation shaft 111 rotates, is fixed to the rotation shaft 111. The first link member 112 has a long plate-like shape and narrows in width gradually as it extends towards a tip T1 thereof, while extending leftwards from the rotation shaft 111.

A second link member 451 is fixed to the rotation shaft 45. The second link member 451 has a substantially quadrangular cross section at a connecting portion where the second link member 451 connects to the rotation shaft 45. A bearing of the second link member 451 at the connecting portion is also formed as a substantially quadrangular through hole. The second link member 451 has a long plate-like shape and narrows in width gradually as it extends towards a tip T2 thereof, while extending in a downward direction. The second link member 451 is provided to be positioned at a left side of the support post 44 (refer to FIG. 1).

The tip T1 of the first link member 112 and the tip T2 of the second link member 451 are connected together by a rod-like linkage 46. For example, the linkage 46 is connected with the tip T1 and the tip T2 via ball joints. Alternatively, a through hole may be formed in each of the tip T1 and the tip T2, so that the tip T1 and the tip T2 may be inserted through the through holes. As a result, the linkage 46 is connected to the first link member 112 so as to rotate on a plane forwards and rearwards, as well as leftwards and rightwards relative to the first link member 112. Additionally, the linkage 46 is connected to the second link member 451 so as to rotate on a plane upwards and downwards, as well as forwards and rearwards relative to the second link member 451. Thus, the second link member 451 connected with the first link member 112 via the linkage 46 can rotate forwards or rearwards in association with the forward or rearward rotation of the first link member 112. A drive unit is formed by the motor 11, the first link member 112, the rotation shaft 45, and the second link member 451.

The fixed rotors 20 (20a, 20b) disposed at the front of the flying body 1 include base tables 21, motors 22 (22a, 22b), and the rotor blades 50 (50a, 50b). Referring to FIG. 2, the left front rotor 20b will be described. The motor 22 is fixed partially to the base table 21 with a revolving shaft side thereof directed downwards. A revolving shaft 51 of the first rotor blade 50b of the left front fixed rotor 20b is supported by a bearing of the base table 21 in a revolving manner. A lower end of the revolving shaft 51 is disposed below the base table 21. A driven gear 52 is formed at the lower end of the revolving shaft 51. The driven gear 52 is driven to revolve by meshing with a drive gear 221 formed at a lower end of a revolving shaft of the motor 22b. Consequently, the first rotor blade 50b is caused to revolve by the motor 22b. Similar to the left front fixed rotor 20b, the right front fixed motor 20a is configured so that the rotor blade 50a is caused to revolve by the motor 22a.

The left rear and right rear movable rotors 30 (30c, 30d) disposed at the rear of the flying body 1 include base tables 31, motors 32 (32c, 32d), rotor support stays 33, and the rotor blades 50 (50c, 50d). The left rear movable rotor 30d will be described. The motor 32 is fixed partially to the base table 31 with a revolving shaft side thereof directed downwards. A revolving shaft 51 of the second rotor blade 50d of the left rear movable rotor 30d is supported by bearings of the base table 31 and the rotor support stay 33 in a revolving manner. A lower end of the revolving shaft 51 is disposed below the base table 31. A driven gear 52 is formed at the lower end of the revolving shaft 51. The driven gear 52 is driven to revolve by meshing with a drive gear 331 formed at a lower end of a revolving shaft of the motor 32d. Consequently, the second rotor blade 50b is caused to revolve by the motor 32d. Similar to the left rear movable rotor 30d, the right rear movable motor 30c is configured so that the rotor blade 50c is caused to revolve by the motor 32c. The rotor support stay 33 is fixed to the rotation shaft 45.

The controller 2 illustrated in FIG. 1 has a substantially rectangular plate-like shape as a whole. On a front surface side of the controller 2 illustrated in FIG. 1, the controller 2 includes a power supply switch SW1, a right controlling device 61, a left controlling device 62, a change-to-flight switch SW2, and a change-to-running switch SW3. The power supply switch SW1 is a vertically movable slide switch and can switch on and off a power supply by moving a knob vertically.

The right controlling device 61, the left controlling device 62, the change-to-flight switch SW2 and the change-to-running switch SW3 function as input devices for inputting commands into an internal circuit of the controller 2. The right controlling device 61 and the left controlling device 62 each have a rod-like shape and can be tilted upwards, downwards, leftwards or rightwards, to apply an input corresponding to a tilting angle to the internal circuit. Additionally, the change-to-flight switch SW2 and the change-to-running switch SW3 are each formed as a push button switch.

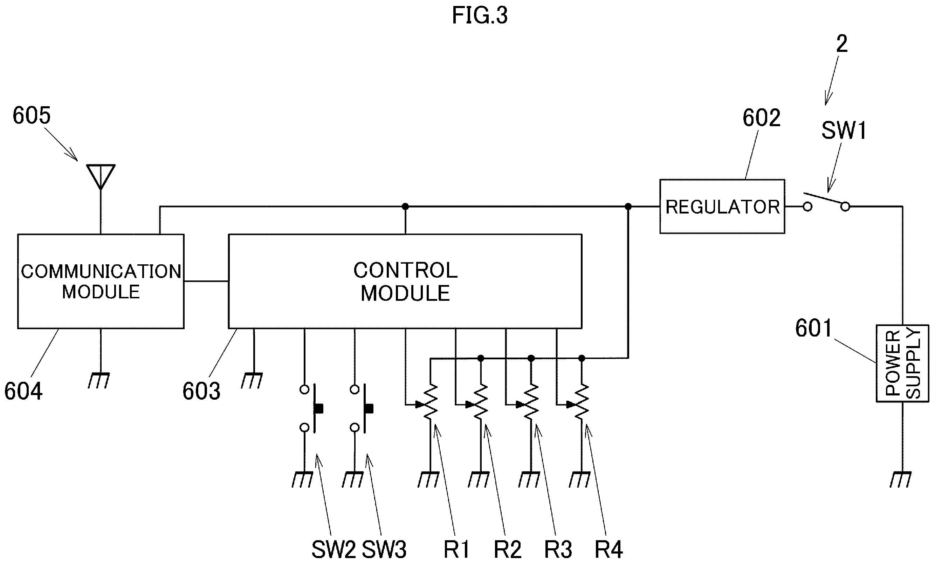

Fig. 3 is a circuit block diagram of the controller 2. The controller 2 includes a power supply 601, a regulator 602, a control module 603, a communication module 604 and an antenna 605. The power supply 601 is connected to the regulator 602 via the power supply switch SW1. The regulator 602 regulates a voltage supplied from the power supply 601. An output end of the regulator 602 is connected to the control module 603, the communication module 604 and resistances R1 to R4. The resistances R1 to R4 are variable resistances. Driving voltages for the control module 603 and the communication module 604 are supplied from the regulator 602.

The control module 603 detects inputs corresponding to input operations of the right controlling device 61, the left controlling device 62, the change-to-flight switch SW2 and the change-to-running switch SW3, which all constitute the input devices. In the control module 603, a value of a voltage inputted from the resistance R1 changes as the right controlling device 61 is operated vertically upwards or downwards, and a value of a voltage inputted from the resistance R2 changes as the right controlling device 61 is operated horizontally leftwards or rightwards. A value of a voltage inputted from the resistance R3 changes as the left controlling device 62 is operated vertically upwards or downwards, and a value of a voltage inputted from the resistance R4 changes as the left controlling device 62 is operated horizontally leftwards or rightwards.

Due to this, the control module 603 detects the upward, downward, leftward and rightward operations of the right controlling device 61 and the left controlling device 62 as changes in voltage. Additionally, the control module 603 also detects a depression of the change-to-flight switch SW2 or the change-to-running switch SW3. The control module 603 transmits a signal inputted into the control module 603 to control the flying body 1 to the communication module 604. The communication module 604 encodes and modulates the control signal and thereafter transmits the encoded and modulated signal to the flying body 1 via the antenna 605.

FIG. 4 is a circuit block diagram of the substrate main body 10 of the flying body 1. The substrate main body 10 includes a power supply 701, a regulator 702, a control module 703, a communication module 704, an antenna 705, and motor drivers 706a to 706d and 707. The power supply 701 is connected to the regulator 702 via a power supply switch SW4. The regulator 702 regulates a voltage supplied from the power supply 701. An output end of the regulator 702 is connected to the control module 703 and the communication module 704. Driving voltages for the control module 703 and the communication module 704 are supplied from the regulator 702. Additionally, the motor drivers 706a, 706b, 706c, 706d and 707 that correspond to the motors 22a, 22b, 32c, 32d and 11 receive a supply of driving voltage from the power supply 701.

The communication module 704 receives the control signal transmitted from the controller 2 via the antenna 705, demodulates and decodes the received control signal, and thereafter outputs the demodulated and decoded signal to the control module 703. The control module 703 controls the drivers 706a to 706d and 707 in accordance with the control signal inputted from the communication module 704. The motors 22a, 22b, 32c, 32d and 11 are controlled individually by the corresponding drivers 706a, 706b, 706c, 706d and 707. The control module 703 detects a posture of the flying body 1 by an acceleration sensor, not shown, and controls individually revolution speeds of the rotor blades 50 so that the flying body 1 can act in accordance with the command received from the controller 2.

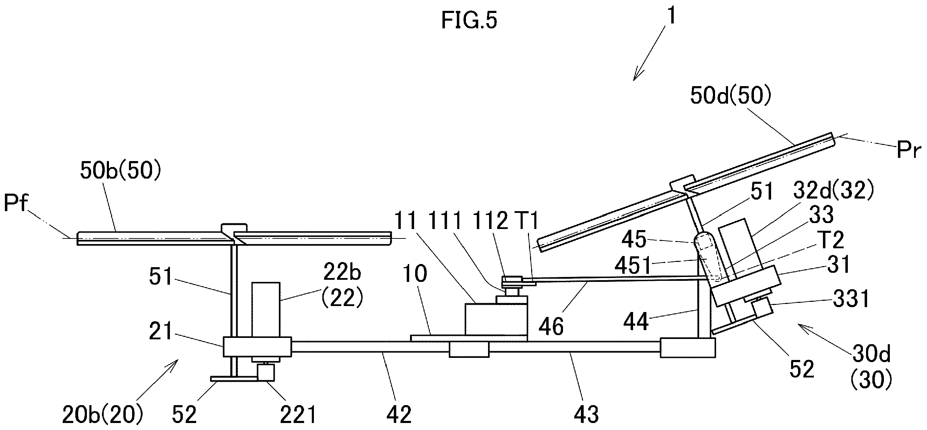

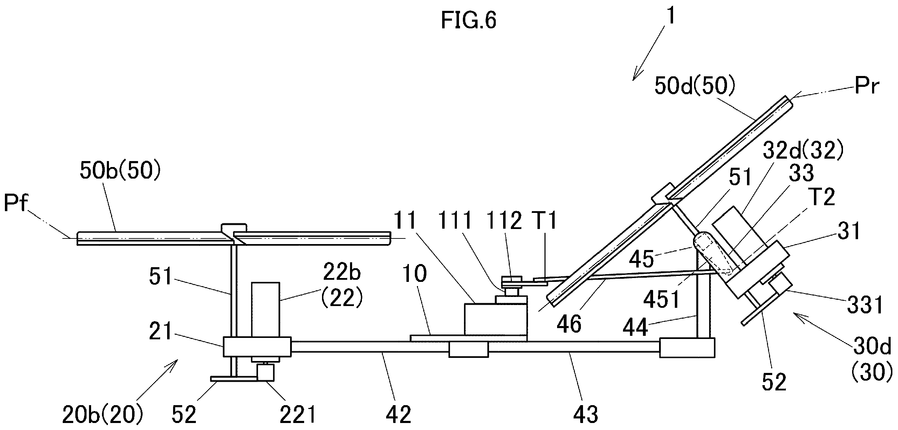

Next, operation modes of the flying body 1 will be described. The flying body 1 can change over its operation modes among a normal moving mode where the movement of the flying body 1 is controlled based on the revolutions of the rotor blades 50, a high-speed flight mode where the flying body 1 can move at high speeds in the air, and a high-speed running mode where the flying body 1 can move at high speeds near the ground. FIG. 2 is the side view illustrating the flying body 1 operated in the normal movement mode. FIG. 5 is a side view of the flying body 1 operated in the high-speed flight mode. FIG. 6 is a side view illustrating the flying body 1 operated in the high-speed running mode. Firstly, the normal movement mode in FIG. 2 will be described.

When power is introduced into the flying body 1, the flying body 1 is actuated in the normal movement mode illustrated in FIG. 2. In the normal movement mode, first revolving planes Pf of the left front and right front first rotor blades 50a, 50b are substantially parallel to second revolving planes Pr of the left rear and right rear second rotor blades 50c, 50d. In the normal movement mode, the flying body 1 moves forwards, rearwards, leftwards and rightwards, turns, and moves upwards and downwards by controlling individually revolution speeds of the left front and right front rotor blades 50a, 50b and the left rear and right rear second rotor blades 50c, 50d.

In the case where the flying body 1 is caused to fly in the normal movement mode, when the left controlling device 62 of the controller 2 is tilted forwards or rearwards, a value of a voltage that the control module 603 detects from the resistance R3 changes to a tilting angle at which the left controlling device 62 is tilted. For example, with the left controlling device 62 tilted forwards, the value of the voltage detected from the resistance R3 is increased, and hence, the control module 603 transmits a move-forwards command signal with an acceleration corresponding to the value of the voltage to the flying body 1 via the communication module 604 and the antenna 605.

The control module 703 of the flying body 1 makes the revolution speeds of the first rotor blades 50a, 50b of the fixed rotors 20a, 20b slower than the revolution speeds of the second rotor blades 50c, 50d of the movable rotors 30c, 30d based on the move-forwards command signal received via the antenna 705 and the communication module 704. Then, the posture of the flying body 1 is tilted forwards. When the control module 703 detects that the flying body 1 tilts forwards at a predetermined angle, the control module 703 controls the revolution speeds of the rotor blades 50a to 50d so that the flying body 1 is propelled forwards. On the contrary, when the left controlling device 62 of the controller 2 is tilted rearwards, the control module 703 controls the revolution speeds of the rotor blades 50a to 50d so that flying body 1 is propelled rearwards.

When the right controlling device 61 is controlled similarly or the right and left controlling devices 61, 62 are controlled in other different manners, too, the flying body 1 is operated to move forwards, rearwards, leftwards or rightwards, turn, or move upwards or downwards by controlling the revolution speeds of the first rotor blades 50a, 50b and the revolution speeds of the second rotor blades 50c, 50d.

The high-speed flight mode illustrated in FIG. 5 will be described. When the control module 603 of the controller 2 detects that the change-to-flight switch SW2 is depressed, the control module 603 transmits a high-speed flight mode switch-on signal to the flying body 1 via the control module 604 and the antenna 605. When the control module 703 of the flying body 1 receives the high-speed flight mode switch-on signal transmitted from the controller 2 via the antenna 705 and the communication module 704, the control module 703 causes the driver 707 to rotate the rotation shaft 111 of the motor 11, whereby the tip T1 of the fist link member 112 to which the linkage 46 is connected is rotated rearwards.

The linkage 46 moves rearwards as a result of the rotation of a connection point where the linkage 46 connects to the tip T1. The tip T2 of the second link member 451 that is connected to the linkage 46 is pushed rearwards, whereby the second link member 451 rotates rearwards about the rotation shaft 45. Then, the rotor support stays 33 of the movable rotors 30c, 30d that are fixed to the rotation shaft 45 rotate rearwards about the rotation shaft 45. Thus, the second revolving planes Pr of the second rotor blades 50c, 50d that are supported on the base tables 31 of the movable rotors 30c, 30d in a revolving manner tilt forwards or towards the first rotor blades 50a, 50b.

In the high-speed flight mode of this embodiment, the second revolving planes Pr of the rear second rotor blades 50c, 50d are tilted at a relatively small angle relative to the first revolving planes Pf of the front first rotor blades 50a, 50b. For example, a tilting angle of the second revolving planes Pr relative to the first revolving planes Pf can be about 45 degrees.

The flying body 1 can move forwards, rearwards, leftwards and rightwards, turn, and move upwards and downwards as the flying body 1 can do in the normal movement mode. In the high-speed flight mode, the response to a move-forwards instruction can be improved, and a high propelling force in the forward direction can be obtained, with the flying body 1 kept hovering in the air.

With the flying body 1 operated in the high-speed flight mode, when the control module 603 of the controller 2 detects again that the change-to-flight switch SW2 is depressed, the control module 603 transmits a normal movement mode switch-on signal to the flying body 1 via the communication module 604 and the antenna 605. When the control module 703 of the flying body 1 receives the normal movement mode switch-on signal transmitted from the controller 2 via the antenna 705 and the communication module 704, the control module 703 causes the driver 707 to rotate the rotation shaft 111 of the motor 11, whereby the tip T1 of the fist link member 112 to which the linkage 46 is connected is rotated forwards.

The linkage 46 moves forwards as a result of the rotation of the rotation shaft 111. The tip T2 of the second link member 451 that is connected to the linkage 46 is pulled forwards, whereby the second link member 451 rotates forwards about the rotation shaft 45. Then, the rotor support stays 33 of the movable rotors 30c, 30d that are fixed to the rotation shaft 45 rotate forwards about the rotation shaft 45 as illustrated in FIG. 2. Thus, the second revolving planes Pr of the second rotor blades 50c, 50d become substantially parallel to the first revolving planes Pf of the first rotor blades 50a, 50b.

The high-speed running mode illustrated in FIG. 6 will be described. When the control module 603 of the controller 2 detects that the change-to-running switch SW3 is depressed, the control module 603 transmits a high-speed running mode switch-on signal to the flying body 1 via the communication module 604 and the antenna 605. When the control module 703 of the flying body 1 receives the high-speed running mode switch-on signal transmitted from the controller 2 via the antenna 705 and the communication module 704, the control module 703 causes the driver 707 to rotate the rotation shaft 111, whereby the tip T1 of the first link member 112 to which the linkage 46 is connected is rotated further rearwards than in the high-speed flight mode in FIG. 5.

The linkage 46 moves rearwards as a result of the rotation of the connection point where the linkage 46 connects to the tip T1. The tip T2 of the second link member 451 that is connected to the linkage 46 is pushed rearwards, whereby the second link member 451 rotates rearwards about the rotation shaft 45. Then, the rotor support stays 33 of the movable rotors 30c, 30d that are fixed to the rotation shaft 45 rotate rearwards about the rotation shaft 45. Thus, the second revolving planes Pr of the second rotor blades 50c, 50d that are supported on the base tables 31 of the movable rotors 30c, 30d in a revolving manner tilt forwards or towards the first rotor blades 50a, 50b.

In the high-speed running mode, the second revolving planes Pr of the rear second rotor blades 50c, 50d are caused to tilt at a greater angle than in the high-speed flight mode relative to the first revolving planes Pf of the front first rotor blades 50a, 50b. For example, the tilting angle of the second revolving planes Pr relative to the first revolving planes Pf (the angle of an acute angle portion) can be about 60 degrees.

In the high-speed running mode, since the second revolving planes Pr are tilted more than in the high-speed flight mode, an upward lift becomes smaller than in the high-speed flight mode, and a propelling force in the direction in which the second revolving planes Pr are tilted (forwards in this embodiment) can be increased more than in the high-speed flight mode. As a result, the flying body 1 travels in the direction in which the second rotor blades 50c, 50d are tilted with the flying body 1 lifted up slightly above the ground. The flying body 1 can move forwards at higher speeds than in the normal movement mode and the high-speed flight mode.

When the control module 603 of the controller 2 detects again that the change-to-running switch SW3 is depressed, with the flying body 1 operated in the high-speed running mode, the control module 603 transmits a normal movement mode switch-on signal to the flying body 1 via the communication module 604 and the antenna 605. When the control module 703 of the flying body 1 receives the normal movement mode switch-on signal transmitted from the controller 2 via the antenna 705 and the communication module 704, the control module 703 causes the driver 707 to rotate the rotation shaft 111 of the motor 11, whereby the tip T1 of the first link member 112 to which the linkage 46 is connected is rotated forwards. As a result, as in the case where the change-to-flight switch SW2 is depressed again with the flying body 1 operated in the high-speed flight mode, the second revolving planes Pr of the second rotor blades 50c, 50d can be changed to become substantially parallel to the first revolving planes Pf of the first rotor blades 50a, 50b.

The embodiment that has been described heretofore is presented as the example of the invention and is not intended at all to limit the scope of the invention.

For example, in the high-speed flight mode and the high-speed running mode described by reference to FIGS. 5 and 6, respectively, the motor 11 may be controlled so that the second revolving planes Pr are directed to the rear by rotating the tip T1 of the first link member 112 so as to move forwards, and rotating the tip T2 of the second link member 451 to move forwards. This can improve the response of the flying body 1 when the flying body 1 moves rearwards. Additionally, a configuration may be adopted in which whether the second revolving planes Pr are directed to the front or directed to the rear can be selected.

Additionally, although the two front first rotor blades 50a, 50b and the two rear second rotor blades 50c, 50d are provided on the flying body 1 in the embodiment, three or more front first rotor blades and three or more rear second rotor blades may be provided on the flying body 1. In addition, a plurality of rotor blades 50 may be provided to be driven on each fixed rotor 20 and each movable rotor 30.

Additionally, other movable rotors like the movable rotors 30 may be provided in place of the fixed rotors 20 in such a way that the other movable rotors can be rotated. That is, the first revolving planes Pf can be tilted forwards or rearwards arbitrarily relative to the second revolving planes Pr.

## Claims

1. A flying body **characterized by** comprising:
a fixed rotor configured to support a first rotor blade in a revolving manner;
a movable rotor configured to support a second rotor blade in a revolving manner; and
a drive unit configured to change an angle of a second revolving plane of the second rotor blade relative to a first revolving plane of a first rotor blade by rotating the movable rotor.

2. The flying body according to claim 1, **characterized in that**
a plurality of the fixed rotors are formed left front and right front on the flying body 1, and that
a plurality of the movable rotors are formed left rear and right rear on the flying body.

3. The flying body according to claim 1 or 2, **characterized in that**
the drive unit comprises:
a motor configured to rotate a first link member;
a rotation shaft to which a second link member and the movable rotor are connected; and
a linkage connected to the first link member and the second link member.

4. The flying body according to claim 3, **characterized by** comprising:
a rear support stay provided to extend parallel to the linkage from a main body to which the motor is fixed; and
a support post provided to rise from the rear support stay to support the rotation shaft rotatably.

5. The flying body according to any one of claims 1 to 4, **characterized in that**
the drive unit is configured to change operation modes of the flying body among:
a normal movement mode where the first revolving plane and the second revolving plane become parallel to each other;
a high-speed flight mode where the second revolving plane is tilted towards the first rotor blade relative to the first revolving plane; and
a high-speed running mode where the second revolving plane is tilted more towards the first rotor blade relative to the first revolving plane than in the high-speed flight mode.
